# EUROPÄISCHE PATENTSCHRIFT

(11) **EP 2 817 123 B1**
(45) Veröffentlichungstag und Bekanntmachung des Hinweises auf die Patenterteilung: **11.09.2019**
(21) Anmeldenummer: 13709742.4
(22) Anmeldetag: 07.02.2013
(51) Int. Cl.: B23K 26/24, B23K 26/10, B23K 26/26, B23K 26/04, B23K 101/34, B23K 103/08

(54) **VERFAHREN ZUM STEPPNAHTSCHWEISSEN EINER STIRNSEITIGEN FLANSCHVERBINDUNG**
METHOD FOR STITCH-WELDING A FRONT FLANGE JOINT
PROCÉDÉ DE SOUDAGE EN LIGNE CONTINUE PAR POINTS D'UN RACCORD PAR BRIDE FRONTAL

(30) Priorität: 20.02.2012 DE 102012101355; 21.05.2012 DE 102012104362
(43) Veröffentlichungstag der Anmeldung: 31.12.2014
(73) Patentinhaber: Scansonic MI GmbH, 12681 Berlin (DE); Volkswagen Aktiengesellschaft, 38440 Wolfsburg (DE)
(72) Erfinder: HASCHKE, Igor, 10437 Berlin (DE); HINZ, Meinulf, 13591 Berlin (DE); KILIAN, Arwed, 14974 Ludwigsfelde (DE); WALTER, Steffen, 13129 Berlin (DE); SCHIWY, Sören, 38106 Braunschweig (DE); HAMMER, Thorge, 38479 Tappenbeck (DE)
(74) Vertreter: Kaufmann, Sigfrid
(86) Internationale Anmeldenummer: PCT/DE2013/100043
(87) Internationale Veröffentlichungsnummer: WO 2013/123933

(56) Entgegenhaltungen:
- EP-A1- 0 365 229
- EP-A1- 1 249 301
- WO-A1-2011/147891
- FR-A1- 2 823 459

## Beschreibung

Die Erfindung betrifft ein Verfahren, mit dem mittels Laserschweißens Steppnähte auf den Stirnseiten von Blechen, vorzugsweise auf aus mindestens zwei Blechen (Fügepartnern) gebildeten Flanschen (d. h. Überlappstößen, die der Verbindung mindestens zweier Bleche dienen), hergestellt werden können. Das Verfahren eignet sich besonders zur Herstellung von Schweißverbindungen zwischen verzinkten, thermisch behandelten Stahlblechen, wie sie häufig im Karosseriebau eingesetzt werden.

Im Automobil-/Karosseriebau werden Flansche (verzinkte Stahlbleche), die z. B. an Türeinstiegsöffnungen, an Türen oder längs von Bauteilkanten auftreten, üblicherweise mittels I-Schweißnähten oder Kehlnähten verschweißt.

Die Qualität von I-Schweißnähten im Flansch (Überlappstoß) genügt häufig, sofern die im Karosseriebau üblichen verzinkten Bleche eingesetzt werden, aufgrund der beim Schweißen von Zinkblechen auftretenden Zinkausgasung, nicht höheren Anforderungen. Der Anbindungsquerschnitt ist begrenzt, die Einschweißtiefe schlecht reproduzierbar (insbesondere bei Mehrblechverbindungen) und Nahtfehler wie Durchschweißen, Schmelzeaustrieb oder keine genügend tiefe Anbindung. Es sind zusätzlich Maßnahmen zur Unterstützung der Zinkentgasung notwendig, die mit zusätzlichen Kosten verbunden sind. Nachteilig ist zudem, dass sich Anbindungsfehler (der Schweißnaht) praktisch nicht zerstörungsfrei nachweisen lassen, denn die Schweißnähte können oberflächlich perfekt aussehen, und dennoch mangelhaft sein.

Kehlnähte an Flanschen können zwar, wegen der verbesserten Entgasungsmöglichkeit (der Zinkdämpfe), mit höherer Qualität hergestellt werden; auch kann hierbei die Nahtanbindung (der Fügepartner) optisch inspiziert werden. Wegen der meist unzureichenden Positioniergenauigkeit des Laserspots zum Überlappstoß (des Bauteils) müssen aber aufwendige Nahtführungssysteme eingesetzt werden. Zudem lässt sich der Anbindungsquerschnitt nicht über die Materialstärke des Oberblechs hinaus steigern, sodass bei vielen Anwendungen zur Vergrößerung des Anbindungsquerschnitts Zusatzwerkstoffe erforderlich sind. Nachteilig ist außerdem, dass, um die Stelle, an der die Kehlnaht geschweißt werden soll, dem Bearbeitungslaser zugänglich zu machen, relativ große Flanschmaße erforderlich sind, was im Widerspruch zur im Fahrzeugbau allgemein angestrebten Massereduktion (Kraftstoffeinsparung) steht.

Aus dem Stand der Technik sind Lösungen bekannt, in denen Verfahren bzw. Vorrichtungen zum stirnseitigen Schweißen von Blechen (aus Blechen gebildeten Flanschen/Überlappstößen) beschrieben sind.

So wird in WO 2011/147891 A1, welche als nächstliegender Stand der Technik angesehen wird, eine Vorrichtung zur Herstellung von stirnseitigen Schweißnähten an (aus Karosserieblechen gebildeten) Überlappstößen beschrieben, die über eine Einrichtung zur optischen Nahtführung und über eine mitlaufende Spanntechnik verfügt. Eine Einrichtung zur gezielten thermischen und prozesstechnischen Behandlung der Fügepartner ist nicht beschrieben, sodass mit der Vorrichtung weder eine optimale Entgasung noch ein Schweißen von thermisch behandelten (gehärteten) Blechen, ohne dass die Bleche im Nahtbereich enthärtet werden, möglich ist.

In DE 10 2006 030 060 A1 wird ein Verfahren zum stirnseitigen Schweißen von Blechen, insbesondere Flanschen mit Blechen aus hochfesten Materialien beschrieben, bei dem die gesamte Stirnfläche des Flansches umschmolzen wird. Der Anbindungsquerschnitt wird im Wesentlichen durch die stirnseitige Fläche der Flansche begrenzt. Das Verfahren kann nicht zum stirnseitigen Schweißen von beliebigen Flanschen verwendet werden, da die gewünschte Schmelzbadmenge nur über einen festgelegten Überstand der Flansche erreicht wird. Weiterhin ist die Differenz des Überstands der Bleche sehr eng toleriert, da das Schmelzevolumen direkt abhängig von dieser Differenz ist. Hierbei müssen erhebliche Aufwendungen in Werkzeuge für Beschnitt und Positionierung getätigt werden.

In US 2004/01188181 A1 wird ein Verfahren zum Zusammenschweißen zweier Stahlbleche beschrieben, bei dem mittels eines ersten Lasers die Bleche im Bereich der zu erzeugenden Schweißnaht so erwärmt werden, dass eines der Bleche plastisch verformt wird, ohne dabei zu schmelzen. Ein zweiter Laser führt den eigentlichen Schweißvorgang durch. Durch das Verfahren soll erreicht werden, dass die beiden Bleche beim Schweißvorgang einen definierten Entgasungsspalt aufweisen. Des Weiteren wird ein stirnseitiges Einschweißen von Mehrblechverbindungen beschrieben, welches mit einer Mehrfach-Fokus-Optik realisiert wird, wodurch es möglich ist, zwei oder mehrere Schweißnähte gleichzeitig zu erzeugen. Nachteilig bei diesem Verfahren ist die Aufteilung der verfügbaren Laserleistung auf mehrere Spots. Die Intensitäten auf den optischen Elementen werden dabei sehr hoch, weil die bestrahlten Flächen auf den optischen Elementen sehr klein werden, was zu einer verstärkten Fokusshift führt.

In JP 2005199827 A wird ein Schweißverfahren zur Erzeugung von Eck- und Stoßnähten beschrieben, bei dem entlang der zu erzeugenden Schweißnaht ein YAG Laser geführt wird, dem in einem definierten räumlichen Abstand ein Halbleiterlaser folgt, der weniger stark fokussiert ist als der YAG Laser. Auf diese Weise sollen Schweißnähte, mit einer schlüssellochartigen Querschnittsfläche erzeugt werden. Nachteilig aus Sicht der Verfügbarkeit der Anlage und aus Sicht der Investitionskosten ist die Verwendung von zwei Laserquellen und zwei Laseroptiken.

Der Erfindung liegt die Aufgabe zugrunde, ein Verfahren zu finden, mit dem Steppschweißnähte stirnseitig auf beliebig geformten Flanschen (Überlappstößen) mittels Laserschweißens aufgebracht werden können. Mit dem Verfahren sollen hohe Nahtfestigkeiten bei optimaler Gefügeausbildung erreicht werden, wobei beim Schweißen von thermisch behandelten Blechen zudem die thermische Enthärtung der Bleche im Wärmeeinflussbereich der Steppschweißnaht minimierbar sein soll.

Die Aufgabe der Erfindung wird durch die Merkmale des Anspruchs 1 gelöst. Weitere vorteilhafte Ausführungen der Erfindung ergeben sich aus den Ansprüchen 2 bis 11.

Beim Verfahren zum Steppnahtschweißen einer stirnseitigen Flanschverbindung, die mindestens zwei Fügepartner aufweist, mittels Laserschweißens, wird während des Schweißvorgangs von der Schweißvorrichtung eine kontinuierliche Vorschubgeschwindigkeit des Bearbeitungslasers in Hauptvorschubrichtung (ungefähr in Richtung der zu schweißenden Naht) vorgegeben.

Nach Maßgabe der Erfindung wird für die Durchführung des Verfahrens eine Strahlbeeinflussungseinrichtung eingesetzt, die den Laserstrahl unabhängig vom kontinuierlichen Vorschub der Schweißvorrichtung (dynamisch) bewegen, den Fokus des Laserstrahls verändern und/oder die Leistung des Laserstrahls variieren (eine überlagerte, synchronisierte Leistungsmodulation durchführen) kann.

Während der Erzeugung der Steppschweißnaht werden mehrfach hintereinander (sich zyklisch wiederholend) die folgenden Schritte ausgeführt:
In einem ersten Schritt werden die Fügepartner (in einem Bereich vor der zu erzeugenden Naht) vorgewärmt. Hierzu wird der kontinuierlichen Vorschubgeschwindigkeit (in Hauptvorschubrichtung) der Schweißvorrichtung mittels der Strahlbeeinflussungseinrichtung zeitweise eine Geschwindigkeit (des Laserstrahls) in Richtung der zu erzeugenden Naht überlagert. Das Vorerwärmen der Fügepartner erfolgt üblicherweise angepasst an deren metallurgische (thermische) Eigenschaften, wie z.B. deren Wärmekapazitäten und deren Wärmeleitfähigkeiten.

In einem nächsten Schritt (Einschweißung) wird eine vergleichsweise kurze Steppschweißnaht (nachfolgend: Stepp) mit relativ geringer resultierender Schweißgeschwindigkeit hergestellt. Üblicherweise wird, um eine Verringerung der resultierenden Vorschubgeschwindigkeit zu erreichen, der von der Strahlbeeinflussungseinrichtung vorgegebenen kontinuierlichen Geschwindigkeit mittels der Strahlbeeinflussungseinrichtung eine Geschwindigkeit in umgekehrter Richtung (entgegen der Richtung der zu erzeugenden Steppschweißnaht) überlagert. Durch die Verringerung der resultierenden Vorschubgeschwindigkeit wird die Streckenenergie, die als Quotient aus Laserleistung und Vorschubgeschwindigkeit definiert ist, beim Schweißen der einzelnen Stepps erhöht.

An die Erzeugung des Stepps schließt sich ein Schritt an, in dem der Zwischenraum zwischen den benachbarten Stepps gebildet wird (Erzeugen eines Abschnitts ohne Schweißnaht). Das Verhältnis der Längen von Zwischenräumen und Stepps wird so gewählt, dass eine gute (zumindest ausreichende) Entgasung der Schweißnaht und entsprechend eine gute (zumindest ausreichende) Nahtanbindung bei den einzelnen Stepps erreicht wird. Eine besonders wichtige Rolle spielt die Entgasung beim Einsatz von verzinkten Stahlblechen, wie sie häufig im Karosseriebau verwendet werden, da die Zinkschicht beim Schweißen verdampft und (bei unzureichender Entgasung) die hierdurch verursachte sog. Zinkausgasung regelmäßig zu Schweißnähten mit geringen Nahtqualitäten (Anbindungsfehler) führt.

Optional werden nach dem Schritt der Erzeugung einer Steppschweißnaht die Fügepartner im Bereich der erzeugten Steppschweißnaht ein zweites Mal bearbeitet (nachbehandelt), indem der kontinuierlichen Vorschubgeschwindigkeit der Schweißvorrichtung mittels der Strahlbeeinflussungseinrichtung zeitweise eine Geschwindigkeit entgegen der Richtung der zu erzeugenden Steppschweißnaht überlagert wird.

Die Nachbehandlung der erzeugten Steppschweißnaht kann darin bestehen, dass die Steppschweißnaht nachgeschweißt (ein zweites Mal geschweißt) wird, wodurch einerseits erreicht wird, dass die Schmelze der Schweißnaht tiefer in den Flansch hineinreicht. Andererseits wird ein zweites Mal Wärme eingetragen und die martensitische Gefügeausbildung und das Abkühlverhalten werden positiv beeinflusst. Dies ist insbesondere beim Schweißen von thermisch behandelten (hochfesten) Stählen von Vorteil, da beim Verschweißen dieser Stähle ohne zusätzlichen Wärmeeintrag spröde und brüchige Nähte entstehen können.

Alternativ kann die Nachbehandlung der erzeugten Schweißnaht auch darin bestehen, dass nach dem Ausgasen/dem Erzeugen des Zwischenraums die Fügepartner und/oder der erzeugte Stepp lediglich nachgewärmt (jedoch nicht nachgeschweißt) wird, indem mittels des Bearbeitungslasers einem Bereich um den frisch erzeugten Stepp Wärme zugeführt wird. Die Nachwärmung dient dazu, Materialspannungen zu verringern und die durch den Schweißvorgang herbeigeführten, thermischen Veränderungen von Fügepartnern aus thermisch behandeltem Stahl ganz oder teilweise rückgängig zu machen.

Bei der Erzeugung der Steppnaht-Abschnitte werden die Kanten der mindestens zwei Fügepartner (weitgehend) bündig angeordnet, was jedoch nicht zwingend notwendig ist.

Der Laserstrahl verläuft vorzugsweise parallel zur Flanschebene und zum Flanschverlauf, es kommt jedoch auf Grund der Zugänglichkeit an realen Werkstücken zu erheblichen Abweichungen aus der senkrechten Schweißposition. Übliche Größenordnungen von +- 10° in der YZ-Ebene und +-30° in der XZ-Ebene sind tolerierbar.

Beim erfindungsgemäßen Verfahren werden Stepps mit einer Länge kleiner 30 mm (bevorzugt kleiner 10 mm) und Zwischenräume zwischen den Steppnaht-Abschnitten größer 1 mm erzeugt, wobei das Verhältnis von Nahttiefe zu Nahtlänge der Steppnaht-Abschnitte mindestens ein Fünftel (vorzugsweise mindestens ein Drittel) beträgt.

In einer vorteilhaften Variante kann während der Erzeugung (mindestens) eines Stepps der kontinuierlichen Vorschubgeschwindigkeit der Schweißvorrichtung mittels der Strahlbeeinflussungseinrichtung eine Geschwindigkeit überlagert werden, die zwischen den beiden Richtungen in und entgegen der Richtung der zu erzeugenden Steppschweißnaht oszilliert. Auf diese Weise wird eine mehrfache Überstreichung des betreffenden Stepps (mit dem Laserstrahl) erreicht.

Des Weiteren kann mittels der Strahlbeeinflussungseinrichtung während des Schweißens eines Stepps sowie während der Vor- und der Nachwärmung der kontinuierlichen Vorschubgeschwindigkeit der Schweißvorrichtung zumindest zeitweise eine Geschwindigkeit in einer Richtung quer zur Vorschubrichtung überlagert werden. Bei synchronisierter Bewegung zweier Scanner können somit vorteilhafte Spotbewegungen erzeugt werden. Zusätzlich steht ein weiterer Freiheitsgrad mit der Veränderung der Fokusebene des Bearbeitungslasers zur Verfügung, hierbei kann die Spotgröße des Laserstrahls in der Stoßebene vergrößert und/oder die Leistung des Bearbeitungslasers angepasst werden.

Durch die o. g. Maßnahmen können bei der Erzeugung des Stepps die resultierende Streckenenergie und bei der Vor- und der Nachwärmung der lokale Wärmeeintrag eingestellt werden.

Die Kurvenform der Überlagerung, die der kontinuierlichen Vorschubgeschwindigkeit in Lateralrichtung überlagert wird, hat bevorzugt einen periodischen, nämlich einen sinus-, rechteck- oder sägezahnförmigen, Verlauf.

Mit dem erfindungsgemäßen Verfahren wird durch die Bereitstellung von ausreichenden Entgasungsmöglichkeiten eine hohe Prozesssicherheit erreicht, d. h. es werden Schweißnähte mit einer reproduzierbaren hohen Nahtqualität (Nahtanbindung) hergestellt.

Durch die Möglichkeit der spezifischen Einstellung der Streckenenergie lassen sich innerhalb der einzelnen Stepps angepasste Anbindungstiefen/angepasste Querschnitte erzeugen.

Mit einer Abstimmung der Schritte Vorwärmung, Einschweißung (Schweißen der Steppnaht-Abschnitte) und ggf. Nachwärmung kann die Bearbeitungsgeschwindigkeit erhöht werden.

Durch die zyklische Variation der Streckenenergie und die Möglichkeit des Nachschweißens/der Nacherwärmung können beim Laserschweißen Fügepartner aus thermisch behandelten Stählen einer spezifischen thermischen Beeinflussung unterzogen werden, wodurch Aufhärtungen in der Wärmeeinflusszone weitgehend vermieden werden und eine sichere Gefügeausbildung in der Schweißzone erreicht wird.

Beim Einsatz des Verfahrens im Karosseriebau wird durch die vorteilhafte Ausbildung der Steppschweißnähte ein verbessertes Crashverhalten (Erhöhung der Anrissenergie, Vermeidung von Reißverschlussaufriss) erreicht.

Zur Überprüfung der Qualität der erzeugten Schweißnähte ist es vorteilhaft, eine Vorrichtung einzusetzen, die entweder mit einer Sensorik ausgestattet ist, die zur Kontrolle der Qualität der erzeugten Schweißnaht dient oder deren Daten direkt zur Steuerung des Schweißprozesses genutzt werden.

Demgemäß kann z. B. mittels einer geometrischen Messung im Nachgang ermittelt werden, ob überhaupt eine Naht vorhanden ist. Mittels Thermographie, durch Auswerten des Prozessleuchtens oder durch eine Keyhole-Beobachtung kann kontrolliert werden, ob die Schweißung durchgeführt wurde.

Die Nahtlänge kann durch Triangulationsverfahren oder durch eine Auswertung des Prozessleuchtens über die Zeit bei bekanntem Vorschub überprüft werden.

Schließlich kann die Güte der Naht durch Auswertung der Prozessemission erfasst werden und eine Auswertung des Wärmebildes zur Beurteilung der thermischen Beeinflussung der mindestens zwei Fügepartner durch den Schweißvorgang erfolgen.

Die Erfindung wird nachfolgend anhand zweier Ausführungsbeispiele näher erläutert; hierzu zeigen:
- Fig. 1:: einen Flansch mit zwei Blechen als Fügepartner und einer stirnseitigen Steppschweißnaht in 3D-Ansicht;
- Fig. 2:: einen Flansch mit drei Blechen als Fügepartner und zwei stirnseitigen Steppschweißnähten in seitlicher Schnittdarstellung,
- Fig. 3:: einen Flansch mit drei Blechen als Fügepartner und zwei stirnseitigen Steppschweißnähten in Draufsicht.

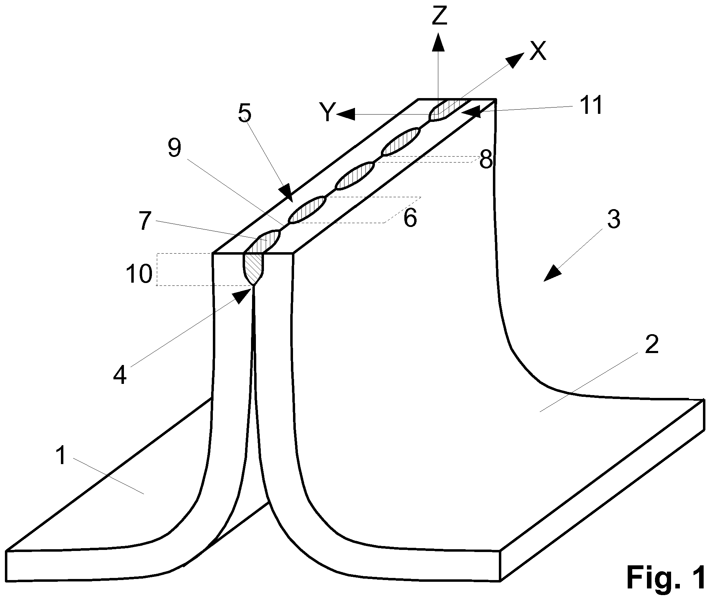

Aus Fig. 1 ist ein erstes Blech 1 und ein zweites Blech 2 ersichtlich, die zu einem Flansch 3 gebogen sind und die mittels einer Spanneinrichtung (nicht dargestellt) zusammengepresst werden, wodurch der zwischen den beiden Flächen im Flanschbereich gebildete Spalt 4 klein gehalten wird. Die beiden Bleche 1, 2 (Fügepartner) sind mittels einer stirnseitigen Steppschweißnaht 5 miteinander verbunden. Die sich in Richtung der zu erzeugenden Steppschweißnaht (Verlaufrichtung der Steppschweißnaht; X-Richtung) erstreckende Länge 6 der Stepps 7 beträgt ca. 7 mm, die Länge 8 des Zwischenraums 9 zwischen benachbarten Stepps 7 beträgt 1 mm. Das Aspektverhältnis zwischen Nahtlänge 6 und Nahttiefe 10 beträgt ein Drittel.

Bei der Herstellung der Steppschweißnaht 5 wird, falls erforderlich, die Streckenenergie (mittels einer Strahlbeeinflussungseinrichtung; nicht dargestellt) durch eine oszillierende Auslenkung des Laserbearbeitungsstrahls in Lateralrichtung (Y-Richtung: steht senkrecht zur X-Richtung und verläuft in der durch die Stirnseiten der Bleche 1, 2 gebildeten Stoßebene 11) und/oder durch eine Änderung der Spotgröße des Lasers mittels Änderung der Fokussierungsebene in Z-Richtung (verläuft senkrecht sowohl zur X- als auch zur Y Richtung) und/oder durch eine Änderung der Laserleistung angepasst.

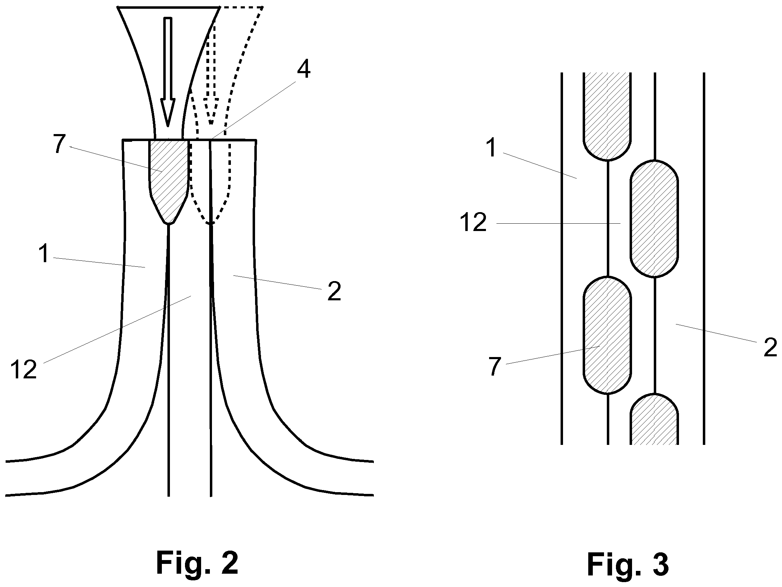

Fig. 2 zeigt eine stirnseitige Steppschweißnaht 5 an einem Flansch, bei dem zwischen den beiden Blechen 1, 2 ein drittes Blech 12 angeordnet ist. Auf die hierdurch gebildeten, zwei Spalten 4, sind alternierend Stepps aufgeschweißt (Fig. 3).

### Liste der verwendeten Bezugszeichen

- 1: erstes Blech/erster Fügepartner
- 2: zweites Blech/zweiter Fügepartner
- 3: Flansch
- 4: Spalt
- 5: Steppschweißnaht
- 6: Länge des Stepps
- 7: Steppnaht-Abschnitt, Stepp
- 8: Länge des Zwischenraums
- 9: Zwischenraum
- 10: Nahttiefe
- 11: Stoßebene
- 12: drittes Blech/dritter Fügepartner

## Patentansprüche

1. Verfahren zum Steppnahtschweißen von einer stirnseitigen Flanschverbindung mit mindestens zwei Fügepartnern (1, 2) durch Laserschweißen mittels eines Laserstrahls, bei dem während des Schweißvorgangs mittels der Schweißvorrichtung eine kontinuierliche Vorschubgeschwindigkeit der Bearbeitungsoptik in Hauptvorschubrichtung vorgegeben wird, umfassend die Schritte, die während der Erzeugung der Steppschweißnaht (5) zyklisch wiederholt werden,
- Vorwärmung der Fügepartner (1, 2) in einem Bereich vor der zu erzeugenden Steppschweißnaht (5), indem der kontinuierlichen Vorschubgeschwindigkeit der Schweißvorrichtung in Hauptvorschubrichtung mittels einer Strahlbeeinflussungseinrichtung, mittels derer der Laserstrahl unabhängig von dem Vorschub der Schweißvorrichtung bewegbar ist, zeitweise unter Bewegung des Laserstrahls eine Bewegungsgeschwindigkeit des Laserstrahls in Richtung der zu erzeugenden Steppschweißnaht (5) überlagert wird;
- Erzeugen eines kurzen Steppnaht-Abschnitts (7) mit verringerter resultierender Schweißgeschwindigkeit, wobei sich die resultierende Schweißgeschwindigkeit aus der Überlagerung der kontinuierlichen Vorschubgeschwindigkeit der Schweißvorrichtung und der von der Strahlbeeinflussungseinrichtung vorgegebenen Bewegungsgeschwindigkeit des Laserstrahls zusammensetzt;
- Überfahren eines Abschnittes in Hauptvorschubrichtung ohne eine Schweißnaht auszubilden, wodurch jeweils ein Zwischenraum (9) zwischen benachbarten Steppnaht-Abschnitten (7) gebildet wird, wobei Steppnaht-Abschnitte (7) mit einer Länge (6) kleiner 30 mm und Zwischenräume (9) zwischen den Steppnaht-Abschnitten (7) mit einer Länge von größer 1 mm erzeugt werden.

2. Verfahren nach Anspruch 1, **dadurch gekennzeichnet, dass** nach dem Schritt der Bildung einer Steppschweißnaht (5) die Fügepartner (1, 2) im Bereich der erzeugten Steppschweißnaht (5) ein zweites Mal bearbeitet werden, indem der kontinuierlichen Vorschubgeschwindigkeit der Schweißvorrichtung mittels der Strahlbeeinflussungseinrichtung zeitweise eine Bewegungsgeschwindigkeit des Laserstrahls entgegen der Richtung der zu erzeugenden Steppschweißnaht (5) überlagert wird.

3. Verfahren nach einem der Ansprüche 1 und 2, **dadurch gekennzeichnet, dass** Steppnaht-Abschnitte (7) mit einer Länge kleiner 10 mm erzeugt werden.

4. Verfahren nach einem der Ansprüche 1 bis 3, **dadurch gekennzeichnet, dass** die Steppnaht-Abschnitte (7) mit einem Verhältnis von Nahttiefe (10) zu Länge von größer ein Fünftel erzeugt werden.

5. Verfahren nach einem der Ansprüche 1 bis 4, **dadurch gekennzeichnet, dass** während der Erzeugung zumindest eines Teils mindestens eines Steppnaht-Abschnitts (7) der kontinuierlichen Vorschubgeschwindigkeit der Schweißvorrichtung mittels der Strahlbeeinflussungseinrichtung eine Bewegungsgeschwindigkeit des Laserstrahls, die zwischen den beiden Richtungen in und entgegen der Richtung der zu erzeugenden Steppschweißnaht (5) wechselt, überlagert wird, wodurch eine mehrfache Überstreichung des Teils des betreffenden Steppnaht-Abschnitts (7) erreicht wird.

6. Verfahren nach einem der Ansprüche 1 bis 5, **dadurch gekennzeichnet, dass** der kontinuierlichen Vorschubgeschwindigkeit der Schweißvorrichtung mittels der Strahlbeeinflussungseinrichtung zumindest zeitweise eine Bewegungsgeschwindigkeit des Laserstrahls in einer Lateralrichtung überlagert wird, die einerseits senkrecht zur Richtung der zu erzeugenden Steppschweißnaht (5) und anderseits in der Stoßebene (11) verläuft, welche durch die Stirnflächen der Fügepartner (1, 2) definiert wird, die den Flansch (3) bilden.

7. Verfahren nach einem der Ansprüche 1 bis 6, **dadurch gekennzeichnet, dass** durch Veränderung der Fokusebene des Lasers die Spotgröße in der Stoßebene (11) vergrößert wird.

8. Verfahren nach einem der Ansprüche 1 bis 7, **dadurch gekennzeichnet, dass** mittels der Strahlbeeinflussungseinrichtung die Leistung des Laserstrahls variiert wird.

9. Verfahren nach Anspruch 6, **dadurch gekennzeichnet, dass** die Überlagerung der Bewegungsgeschwindigkeit des Laserstrahls in der Lateralrichtung mittels einer periodischen Funktion erfolgt.

10. Verfahren nach Anspruch 9, **dadurch gekennzeichnet, dass** die Überlagerung der Bewegungsgeschwindigkeit des Laserstrahls in der Lateralrichtung sinus-, rechteck- oder sägezahnförmig erfolgt.

11. Verfahren nach einem der Ansprüche 9 und 10, **dadurch gekennzeichnet, dass** das Vorerwärmen der mindestens zwei Fügepartner (1, 2) jeweils angepasst an ihre metallurgischen Eigenschaften erfolgt.

12. Verfahren nach einem der Ansprüche 1 bis 11, **dadurch gekennzeichnet, dass** unter Verwendung einer Sensorik, die zur Kontrolle der Qualität der erzeugten Steppschweißnaht (5) dient, ermittelt wird, ob die Schweißung durchgeführt wurde.

13. Verfahren nach einem der Ansprüche 1 bis 12, **dadurch gekennzeichnet, dass** unter Verwendung einer Sensorik, die zur Kontrolle der Qualität der erzeugten Steppschweißnaht (5) dient, die Länge der Steppnaht-Abschnitte (7) oder der gesamten Steppschweißnaht (5) durch Triangulationsverfahren oder durch eine Auswertung des Prozessleuchtens über die Zeit bei bekanntem Vorschub überprüft wird.

14. Verfahren nach einem der Ansprüche 1 bis 13, **dadurch gekennzeichnet, dass** die Güte der Steppschweißnaht (5) durch Auswertung der Prozessemission erfasst wird.

15. Verfahren nach einem der Ansprüche 1 bis 14, **dadurch gekennzeichnet, dass** unter Verwendung einer Sensorik, deren Daten zur weiteren Steuerung des Schweißprozesses genutzt werden, eine Auswertung des Wärmebildes zur Beurteilung der thermischen Beeinflussung der mindestens zwei Fügepartner (1, 2) durch den Schweißvorgang durchgeführt wird.

## Claims

1. Method for stitch-welding a front flange joint having at least two joining partners (1, 2) by laser welding by means of a laser beam, in which during the welding procedure by means of the welding device a continuous feed rate of the processing optics is predetermined in main feed direction, comprising the steps, which are repeated cyclically during the production of the stitching weld seam (5),
- preheating the joining partners (1, 2) in an area in front of the stitching weld seam (5) to be produced, in that intermittently during the movement of the laser beam a movement speed of the laser beam in the direction of the stitching weld seam (5) to be produced is superimposed onto the continuous feed rate of the welding device in main feed direction by means of a beam influencing apparatus, by means of which the laser beam can be moved independently of the feed of the welding device;
- producing a short stitch-portion (7) with reduced resulting welding speed, wherein the resulting welding speed is composed of the superimposition of the continuous feed rate of the welding device and the movement speed of the laser beam predetermined by the beam influencing device;
- traversing a portion in main feed direction without forming a stitch weld, whereby in each case an intermediate space (9) is formed between adjacent stitch-portions (7), wherein stitch-portions (7) are produced having a length (6) of less than 30 mm and intermediate spaces (9) between the stitch-portions (7) are produced having a length greater than 1 mm.

2. Method according to claim 1, **characterised in that** after the step of forming a stitching weld seam (5) the joining partners (1, 2) in the area of the produced stitching weld seam (5) are processed a second time, **in that** intermittently a movement speed of the laser beam against the direction of the stitching weld seam (5) to be produced is superimposed onto the continuous feed speed of the welding device by means of the beam influencing apparatus.

3. Method according to any of claims 1 and 2, **characterised in that** stitch-portions (7) with a length of less than 10 mm are produced.

4. Method according to any of claims 1 to 3, **characterised in that** the stitch-portions (7) are produced with a ratio of stitch depth (10) to length that is greater than a fifth.

5. Method according to any of claims 1 to 4, **characterised in that** during the production of at least one part of at least one stitch-portion (7) a movement speed of the laser beam, which alternates between the two directions in and against the direction of the stitching weld seam (5) to be produced, is superimposed onto the continuous feed rate of the welding device by means of the beam influencing apparatus, as a result of which a multiple overlining is achieved of the part of the stitch-portion (7) concerned.

6. Method according to any of claims 1 to 5, **characterised in that** at least intermittently a movement speed of the laser beam in a lateral direction is superimposed onto the continuous feed rate of the welding device by means of the beam influencing apparatus, which lateral direction on the one hand extends perpendicularly to the direction of the stitching weld seam (5) to be produced and on the other hand extends in the impact plane (11) which is defined by the end surfaces of the joining partners (1, 2) which form the flange (3).

7. Method according to any of claims 1 to 6, **characterised in that** by changing the focal level of the laser the spot size in the impact plane (11) is increased.

8. Method according to any of claims 1 to 7, **characterised in that** by means of the beam influencing apparatus the power of the laser beam is varied.

9. Method according to claim 6, **characterised in that** the superimposition of the movement speed of the laser beam in the lateral direction takes place by means of a periodic function.

10. Method according to claim 9, **characterised in that** the superimposition of the movement speed of the laser beam in the lateral direction is performed in a sinusoidal, rectangular or serrated manner.

11. Method according to any of claims 9 and 10, **characterised in that** the preheating of the at least two joining partners (1, 2) is adapted in each case to their metallurgical properties.

12. Method according to any of claims 1 to 11, **characterised in that** by using a sensor system, which serves to control the quality of the produced stitching weld seam (5), it is determined whether the welding was carried out.

13. Method according to any of claims 1 to 12, **characterised in that** by using a sensor system, which serves to control the quality of the produced stitching weld seam (5), the length of the stitch-portions (7) or of the entire stitching weld seam (5) is verified by a triangulation method or by an evaluation of the process lighting over time in the case of a known feed.

14. Method according to any of claims 1 to 13, **characterised in that** the quality of the stitching weld seam (5) is determined by evaluating the process emission.

15. Method according to any of claims 1 to 14, **characterised in that** by using a sensor system, the data of which are used for further controlling the welding process, an evaluation is carried out of the thermal image for assessing the thermal influence of the at least two joining partners (1, 2) by the welding procedure.

## Revendications

1. Procédé de soudage en ligne continue par points d'une liaison bridée côté avant avec au moins deux parties à assembler (1, 2) par soudage au laser au moyen d'un faisceau laser, pour lequel pendant le processus de soudage au moyen du dispositif de soudage une vitesse d'avance continue de l'optique de traitement dans un sens d'avance principal est prescrite, comprenant les étapes qui sont répétées de manière cyclique pendant la génération de la soudure en ligne continue par points (5),
- le préchauffage des parties à assembler (1, 2) dans une zone avant la soudure en ligne continue par points (5) à générer, en superposant temporairement une vitesse de déplacement du faisceau laser en direction de la soudure en ligne continue par points (5) à générer en déplaçant le faisceau laser à la vitesse d'avance continue du dispositif de soudage dans le sens d'avance principal au moyen d'un dispositif d'influence de faisceau, au moyen duquel le faisceau laser est mobile indépendamment de l'avance du dispositif de soudage ;
- la génération d'une section de ligne continue par points courte (7) avec une vitesse de soudage résultante réduite, dans lequel la vitesse de soudage résultante se compose de la superposition de la vitesse d'avance continue du dispositif de soudage et de la vitesse de déplacement prescrite par le dispositif d'influence de faisceau du faisceau laser ;
- le passage d'une section dans le sens d'avance principal sans réaliser de ligne de soudure, par quoi respectivement un espace intermédiaire (9) est formé entre des sections de ligne continue par points contiguës (7), dans lequel des sections de ligne continue par points (7) sont générées avec une longueur (6) inférieure à 30 mm et des espaces intermédiaires (9) entre les sections de ligne continue par points (7) avec une longueur supérieure à 1 mm.

2. Procédé selon la revendication 1, **caractérisé en ce qu'**après l'étape de la formation d'une soudure en ligne continue par points (5) les parties à assembler (1, 2) dans la zone de la soudure en ligne continue par points (5) générée sont traitées une seconde fois en superposant temporairement une vitesse de déplacement du faisceau laser dans le sens inverse au sens de la soudure en ligne continue par points (5) à générer à la vitesse d'avance continue du dispositif de soudage au moyen du dispositif d'influence de faisceau.

3. Procédé selon l'une quelconque des revendications 1 et 2, **caractérisé en ce que** des sections de ligne continue par points (7) sont générées avec une longueur inférieure à 10 mm.

4. Procédé selon l'une quelconque des revendications 1 à 3, **caractérisé en ce que** les sections de ligne continue par points (7) sont générées avec un rapport entre la profondeur de ligne (10) et la longueur de plus d'un cinquième.

5. Procédé selon l'une quelconque des revendications 1 à 4, **caractérisé en ce que** pendant la génération d'au moins une partie d'au moins une section de ligne continue par points (7) une vitesse de déplacement du faisceau laser qui change entre les deux directions dans le sens et dans le sens inverse au sens de la soudure en ligne continue par points (5) à générer est superposée à la vitesse d'avance continue du dispositif de soudage au moyen du dispositif d'influence de faisceau, ce qui permet d'atteindre un balayage multiple de la partie de la section de ligne continue par points concernée (7).

6. Procédé selon l'une quelconque des revendications 1 à 5, **caractérisé en ce qu'**une vitesse de déplacement du faisceau laser dans un sens latéral est au moins temporairement superposée à la vitesse d'avance continue du dispositif de soudage au moyen du dispositif d'influence de faisceau, laquelle s'étend d'une part perpendiculairement au sens de la soudure en ligne continue par points (5) à générer et d'autre part dans le plan de joint (11) qui est défini par les surfaces avant des parties à assembler (1, 2) qui forment la bride (3).

7. Procédé selon l'une quelconque des revendications 1 à 6, **caractérisé en ce que** la grandeur de faisceau dans le plan de joint (11) est agrandie par modification du plan focal du laser.

8. Procédé selon l'une quelconque des revendications 1 à 7, **caractérisé en ce que** la puissance du faisceau laser est variée au moyen du dispositif d'influence de faisceau.

9. Procédé selon la revendication 6, **caractérisé en ce que** la superposition de la vitesse de déplacement du faisceau laser dans le sens latéral est effectuée au moyen d'une fonction périodique.

10. Procédé selon la revendication 9, **caractérisé en ce que** la superposition de la vitesse de déplacement du faisceau laser dans le sens latéral est effectuée de manière sinusoïdale, rectangulaire ou en dent de scie.

11. Procédé selon l'une quelconque des revendications 9 et 10, **caractérisé en ce que** le préchauffage des au moins deux parties à assembler (1, 2) est effectué respectivement de manière adaptée à leurs propriétés métallurgiques.

12. Procédé selon l'une quelconque des revendications 1 à 11, **caractérisé en ce qu'**il est déterminé si la soudure a été réalisée en utilisant des capteurs qui servent au contrôle de la qualité de la soudure en ligne continue par points (5) générée.

13. Procédé selon l'une quelconque des revendications 1 à 12, **caractérisé en ce qu'**en utilisant des capteurs qui servent au contrôle de la qualité de la soudure en ligne continue par points (5) générée, la longueur des sections de ligne continue par points (7) ou de la soudure en ligne continue par points (5) entière est vérifiée par procédé de triangulation ou par une évaluation de l'éclairage de processus au cours du temps en cas d'avance connue.

14. Procédé selon l'une quelconque des revendications 1 à 13, **caractérisé en ce que** la qualité de la soudure en ligne continue par points (5) est détectée par évaluation de l'émission de processus.

15. Procédé selon l'une quelconque des revendications 1 à 14, **caractérisé en ce qu'**en utilisant des capteurs, dont les données sont utilisées pour poursuivre la commande du processus de soudage, une évaluation de l'image thermique est réalisée pour l'évaluation de l'influence thermique d'au moins deux parties à assembler (1, 2) par le processus de soudage.
